# EUROPEAN PATENT SPECIFICATION

(11) **EP 4 405 726 B1**
(45) Date of publication and mention of the grant of the patent: **07.05.2025**
(21) Application number: 22821559.6
(22) Date of filing: 08.12.2022
(51) Int. Cl.: G02B 5/26, G02B 5/18

(54) **FOIL AND FOIL ASSEMBLY FOR SHADING THE EARTH**
FOLIE UND FOLIENANORDNUNG ZUM BESCHATTEN DER ERDE
FEUILLE ET ENSEMBLE FEUILLE POUR L'OMBRAGE DE LA TERRE

(43) Date of publication of application: 31.07.2024
(73) Proprietor: EARTHGUARD AG, 80333 München (DE)
(72) Inventor: FIERLINGER, Anna Maria, 85748 Garching (DE); SCHOELLER, Philipp A., 82067 Ebenhausen (DE)
(74) Representative: Grünecker Patent- und Rechtsanwälte PartG mbB
(86) International application number: PCT/EP2022/085051
(87) International publication number: WO 2024/120642

(56) References cited:
- EP-A1- 3 992 679
- US-A1- 2010 072 170
- US-A1- 2013 001 615
- ANGEL ROGER: "Feasibility of cooling the Earth with a cloud of small spacecraft near the inner Lagrange point (L1)", PROCEEDINGS OF THE NATIONAL ACADEMY OF SCIENCES, vol. 103, no. 46, 14 November 2006 (2006-11-14), pages 17184 - 17189, XP093068010, ISSN: 0027-8424, DOI: 10.1073/pnas.0608163103
- TELLER EDWARD ET AL: "Global Warming and Ice Ages", 22ND INTERNATIONAL SEMINAR ON PLANETARY EMERGENCIES, ERICE (SICILY), ITALY AUGUST 20-23, 1997, 15 August 1997 (1997-08-15), XP093068127, Retrieved from the Internet <URL:https://web.archive.org/web/20160127185550if_/https://e-reports-ext.llnl.gov/pdf/231636.pdf> [retrieved on 20230727]

## Description

### BACKGROUND

Contemporary climate change includes both global warming and its impacts on Earth's weather patterns. There have been previous periods of climate change, but the current rate of change is distinctly more rapid and is not due to natural causes. Instead, it is caused by the manmade changes to the greenhouse effect, among those the emission of two important gases, carbon dioxide (CO2) and methane. Burning fossil fuels for energy production creates most of these emissions. Certain agricultural practices, industrial processes, and forest loss are additional sources. Greenhouse gases are transparent to sunlight, allowing it through to heat the Earth's surface. When the Earth emits that heat as infrared radiation the gases absorb it, trapping the heat near the Earth's surface and causing global warming.

All scenarios of warming of the earth's atmosphere discussed of the IPCC (Intergovernmental Panel on Climate Change) shown a temperature increase of 1.5 degrees or more beyond the level of the preindustrial age in every possible scenario.

There have been discussed many environmental engineering concepts that could potentially stop or slow down the increase of the atmosphere's temperature, such as simulating a volcanic eruption. This involves bringing sulfur particles into the stratosphere, which then reflect solar radiation and cause the average temperature on Earth to drop by half a degree for a short time. However, such an intervention would have significant side effects: The sulfur particles could damage the ozone layer and the temperature difference between the tropics and the poles would decrease. Moreover, such a process would not be reversible.

Another idea is based on blocking solar radiation from the earth and thus stopping global warming. The ideas range from giant sunshades to mirrors in space that would reflect the radiation. However, the costs are immense - and the implementation is not feasible due to the associated immense mass of such mirrors.

Thus, while in principle the idea of placing a mirror or a lens in the path between sun and earth is not new and actually is common knowledge, an actual solution has always been completely unrealistic when looked at in detail. The present application describes a solution required to reduce the incident solar energy on Earth. The here presented concept is technically highly challenging and costly, but nevertheless the only feasible solution for a global control of solar irradiation in a reversible manner.
EP 3 992 679 A1 discloses a polarization element having good polarization properties and being excellent in heat dissipation property and manufacturing costs. In order to solve this problem, a polarization element is provided that includes a substrate made of a transparent inorganic material, a grid structural body which is made of a transparent material and that includes a base portion provided along a surface of the substrate and protruding portions protruding from the base portion in a grid, and an optical functional layer which is formed on the protruding portions, and includes an absorptive layer for absorbing light, a reflective layer for reflecting light, or a multilayer having at least the absorptive layer and the reflective layer.

### SUMMARY

It is therefore the object of the invention to provide an improved foil and foil assembly for shading the earth. This object is solved by the subject matter of the independent claims. Preferred embodiments are defined by the dependent claims.

The present invention relates to a concept of shading the earth by providing a foil and an arrangement of multiple foils that efficiently prevents solar flux from reaching the earth. At the same time, the present invention minimizes the weight of such foil and arrangement by combining multiple physical effects.

According to an aspect of the present invention, a foil is provided. The foil may comprise a carrier substrate and a (or an arbitrary) line pattern of vapor deposited aluminum layer on the carrier substrate. The carrier substrate may be ultrathin and may be made of a material that is substantially transparent for visible light, specifically due to the minimizes thickness. The line pattern may be an alternating pattern of first beam-shaped areas and second beam-shaped areas. Only the first beam shaped areas may be comprised of the aluminum layer on the carrier substrate. The second beam-shaped areas may be punctured to reduce weight of the foil. The aluminum layer may have a thickness of one atomic layer of aluminum.

Further, an assembly of multiple foils described herein may is provided for shading the earth. The assembly may comprise a plurality of foils, which are relatively positioned to each other in a predetermined arrangement. The assembly may further comprise a plurality of strings for connecting the plurality of foils to assemble the assembly in a predetermined arrangement. The assembly may be configured to interact with incident light from its path from the sun towards the earth by (a) partially reflecting the incident light, (b) partially absorbing the incident light and re-emitting it uniformly, and (c) partially Bragg diffracting the incident light. The mass of the assembly and the size of an effectively irradiated area of the assembly may be configured such that the assembly is in a force equilibrium of gravitational forces and photon pressure when arranged and positioned at a predetermined position between the earth and the sun.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF SUMMARY OF THE DRAWINGS

Embodiments and aspects will be described in the following description and together with the accompanying drawings, wherein
Fig. 1 is a diagram showing a basic structure of an exemplary foil;
Fig. 2 is a diagram showing a structural concept of the arrangement of punctures and layers on the foil;
Fig. 3 is a diagram showing an exemplary arrangement of the assembly in space between the sun and the earth; and
Fig 4 is a diagram showing the stepped relative arrangement of individual foils.

### DETAILED DESCRIPTION

Reference will now be made in detail to the exemplary embodiments, examples of which are illustrated in the accompanying drawings.

With the planet warming up and thus extra emitted radiation and with extra losses through clouds etc., an extra solar absorption of approximately 0.75 W/m² is given, compared to an average absorption of 240 W/m² on earth, which is 0.3% of the incident solar flux calculated for the current imbalance, which is about 1 degree at the moment. A very similar number comes from the naïve estimate of a 287 K influence of solar radiation on the earth's temperature. A reduction of 1 degree would correspond to 0.3% reduction of solar flux.

The basic concept of the invention is the placement of a means for reduction of solar irradiation between earth and sun, close to the Lagrange Point L1, more than 1.5 Million km away from the position of the earth directly in the direction of the sun. The duration of the orbit of an object placed in L1 is synchronous with the earth. However, the object would require active control, as the position is not stable.

Any object in L1 reduces the flux of photons on the earth's surface. An object with the cross section 6371km x 6371km x π = 1.3x10¹⁴ m² would produce shade on the whole earth. A reduction of 1 degree would thus correspond to reducing the flux by 1/287, or placing a dark spot of 3.8x10¹¹ m² close to L1.

The above described concept, however, comes with challenging problems. Any known technical solution so far would fail because of the mere dimension and therefore mass of this object, which prevents implementation on the position because of transporting it there. Further, a solar sail with more than 10¹¹ m² feels a lot of photon pressure acting on it. While this is no problem for most satellites, here the size and the very low intended mass would cause massive acceleration of the object due to photon pressure.

The present invention and the herein described inventive concepts solve these problems in an efficient manner as will be discussed in more details. The basic idea of the present invention suggests a material, which deploys different effects to reduce light reaching the earth. Further, the geometrical arrangement of the material causes the arrangement to actually stay in position as a shield and its availability.

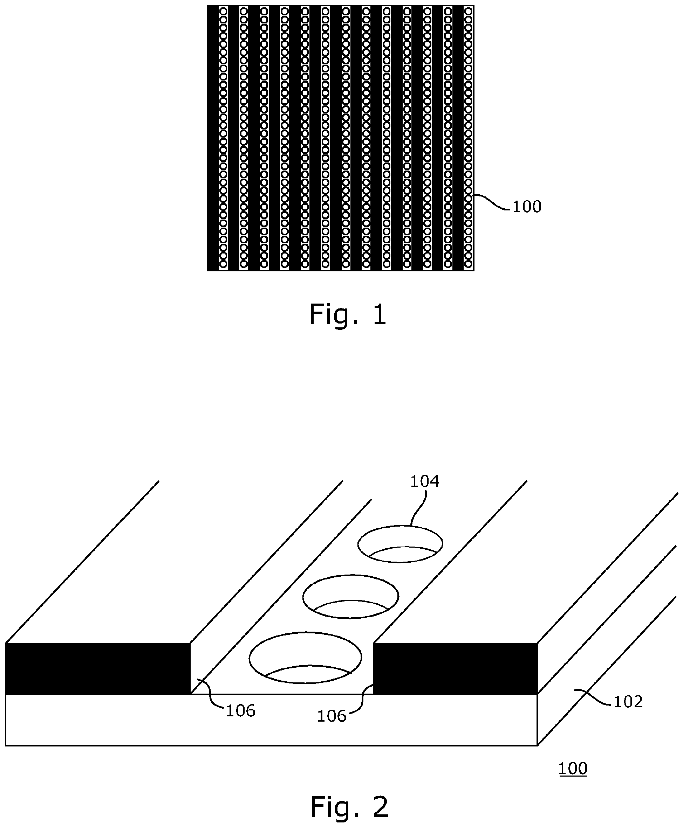

Figs. 1 and 2 show exemplary arrangements of a foil that may be used according to an aspect of the invention. The foil 100 as illustrated is only for providing a better understanding of the structure of the foil 100 and the illustration is not to scale. Further, the exact geometry of the components in Figs. 1 and 2 are for illustrative purposes only and may differ from the actual geometry of the foil 100.

The foil 100 comprises a carrier substrate 102. The carrier substrate 102 may be made of formvar material or nylon and has a thickness in the range of 8nm. Techniques for producing carrier materials 102 with less than 10nm thickness exist and are state of the art.

The basic idea of production of the carrier substrate 102 is similar to making nylon: two liquids are placed in a bath on top of each other. The liquids do not mix and form a chemical reaction on their contact surface, which solidifies. If one pulls on this layer with a specified velocity, the thickness of the layer can be defined. This method can be arbitrarily scaled and an infinite length foil with a width defined by the maximum bath width can be produced.

The production of the material can be scaled up from this technique to an infinite length and even up to kilometer-scale wide sheets can be produced with a machine of sufficient width.

However, the above technique is only one possibility for producing the carrier substrate 102 and other techniques may also be sufficient to produce such ultrathin foil. An alternative technique may be stretching. Stretching techniques exist, where commercially available polypropylene films may be stretched to thicknesses in the range 0.2-1.0 µm. Such films are used as windows for soft x-ray proportional counters, gas absorption cells, energy-loss nuclear detectors, and high vacuum isolation.

The invention is not limited to a specific carrier substrate 102, but it is advantageous to use a substrate that is particularly thin, particularly light, particularly stable and interacts only minimally or not at all with electromagnetic waves in the visible spectrum.

Directly from the production line, after the carrier substrate 102 dries and before it gets rolled for storage, the carrier substrate 102 may get punctured by patterned laser-light with typically 1 micrometer dimension to reduce the mass of the material by 30%. As can be seen in Fig. 2, punctures 104 are arranged in the carrier substrate 102 along a beam shape. The carrier substrate 102 is substantially transparent to visible light and beyond, i.e. substantially transparent for light with wavelength within the range of 200nm and 1000nm.

In the non-patterned parts of the structure, aluminum structure with 1µm spacing between 1µm strips may be vapor deposited in a continuous foil-throughput machine with a thickness of 8 nm, which corresponds approximately to one atomic layer of aluminum.

Vapor deposition for plastic foils is industry standard e.g. for super-insulation foils: Here, the carrier substrate 102 may be guided into and out of a vacuum chamber with entrance and exit slits for the foil. Inside the chamber, aluminum vapor is produced through heating. The vapor deposits on the carrier substrate 102 and forms an optically thick layer, which may be a thickness of one atomic layer of aluminum.

In other words, a line pattern of vapor deposited aluminum layer 106 may be built on the carrier substrate 102. The line pattern may be seen as an alternating pattern of first beam-shaped areas and second beam-shaped areas. Only the first beam shaped areas may be comprised of the aluminum layer 106 on the carrier substrate 102 and the second beam-shaped areas may be punctured to include holes 104 to reduce weight of the foil 100. In an exemplary embodiment, the alternating pattern of the first and second beam-shaped areas comprise a width within a range of substantially 1µm to 2µm.

Alternatively, the laser punctures or holes 104 may be produced after the carrier substrate 102 is vapor deposited with the aluminum layer 106, thereby removing the aluminum layer 106 along the second beam shaped areas. As such, the second beam shaped areas may be simply the areas, where the punctures are located.

The foil 100 combines the physical effects of absorption of light (several percent), reflection of light (50% or less, depending on the patterning and structure of the aluminum) and Bragg diffraction (rest), depending on the patterning. As such, the patterning of the aluminum layer makes the foil 100 a combination of a mirror, an absorber and a Bragg grating.

An exemplary alternative realization could be parallel aluminum strips or a crossed pattern. Such composition may use thin layer reflection properties of aluminum together with diffraction properties of the aluminum fabric. in such alternative realization, no carrier substrate or at least less carrier substrate may be required.

Referring back to Figs. 1 and 2, as discussed, the areas without aluminum layer 106 are substantially transparent for visible light. These areas may be areas, where light hits directly on the carrier substrate 102, i.e. where no aluminum layer 106 is present, or where light passes one of the punctures 104. Based on the given geometry and the spacing of the aluminum layers 106 and/or the punctures 104 on the substrate 102, Bragg diffraction occurs and the light that passes the foil 100 is diffracted similar to light passing an a diffraction grating, which is an optical component with a periodic structure that diffracts light into several beams travelling in different directions.

Here, the spacing of the aluminum layers of 1-2 micrometer results in 2 degrees for 200 nm and 8 degrees for 500 nm deviation of the light beam for the zero-order maximum. At more than 1.5 Million km distance to the earth, this light does not reach the earth's surface.

Combining the effects, dimensions of the assembly can be estimated. The surface of 3.8x10¹¹ m² is multiplied with 1/0.85 for residual transmission and with 0.75 for the mass reduction due to laser punctures 104. With a density of 950 kg/m³ for the carrier substrate 102 and 2700 kg/m³ for the aluminum 106, a mass of 9400 tons is calculated.

While this number is massive for space transport, with a payload of approximately 20 tons per flight for this distance using a SpaceX Falcon heavy rocket, this results in 470 starts, or 320 starts for the SpaceX starship, which can in principle done within one year, compared to more than 20.000 needed flights using a conventional mirror foil. While these are massive numbers, in comparison to all other technical solutions this is at least an order of magnitude smaller and compares to a number of starts which has easily been accomplished by mankind in the past and can in principle be realized in a time-scale matching the need to reduce global warming.

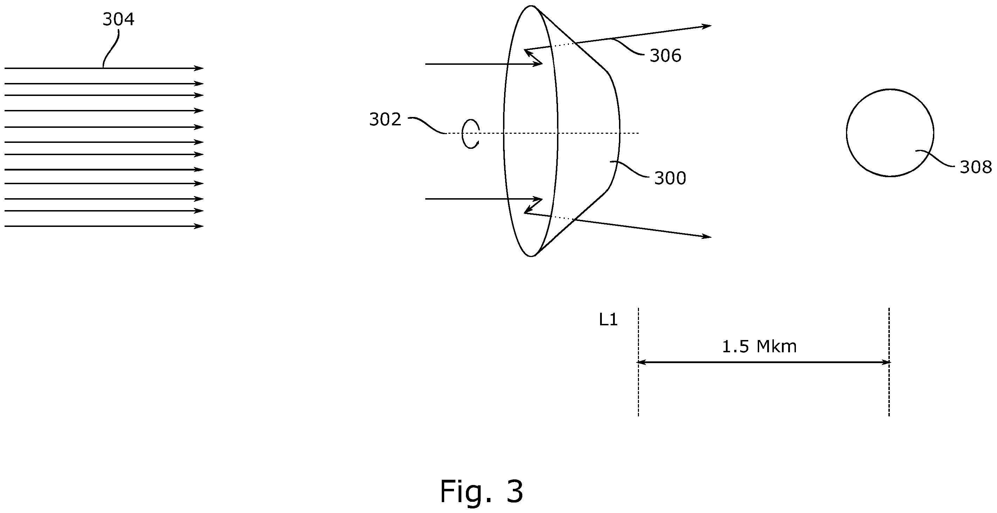

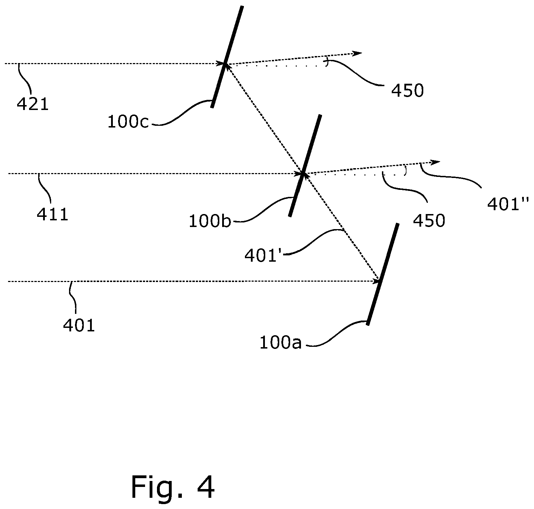

A conceptual diagram of an assembly 300 comprising a plurality of foils 100 is shown in Fig. 3. The assembly 300 as illustrated in Fig. 3 is highly simplified and only gives an impression of a possible outer geometry of the assembly 300. In more detail, the outer shape of the assembly 300 may be comprised of a plurality of foils 100 that are arranged such that their surfaces are substantially directed towards the sun. Further details regarding the relative positioning of the plurality of foils 100 can be seen in Figure 4. Notably, the assembly 300 may either be the whole construction connected together, or the assembly 300 may be only a subpart of the whole system, e.g. the assembly may be a subset of foils 100 which are combined to be a partial unit in the whole system. In the second case, there may be a plurality of assemblies 300 that build the surface of the whole construction.

As can be seen in Fig. 3, the assembly 300 may be placed near the Lagrange point L1. The L1 point lies on the line defined between the sun and the earth. It is the point where the gravitational attraction of the sun and that of the earth combine to produce an equilibrium. Due to the photon pressure force caused by the sun light incident to the foils 100, the assembly 300 is not placed on the exact position of L1 but is placed closer to the sun, such that the assembly 300 is in a force equilibrium of gravitational forces and photon pressure when arranged and positioned at this predetermined position.

In order to span the plurality of foils 100 and to assemble the assembly 300, the foils may be connected by strings (not shown) and the whole assembly 300 rotates around axis 302. In this manner, no frame is required for spanning the individual foils 100, but the centrifugal force resulting in the rotation spans the foils that are connected by strings.

The sun light 304, when incident on the assembly 300 will be mainly mirror reflected or Bragg diffracted such that the light does not reach the earth 308 as conceptually shown in Fig. 4 as light rays 306.

Heating of the material by the sun is not an issue, as the heat conductivity from front to back side is very high due to the small thickness, which causes the heat to radiate away efficiently on the shaded back side.

As stated above, an important aspect is the massive momentum transfer of incident solar flux, which causes a Mega-Newton force on the whole surface, which results in significant acceleration due to the extremely minimized mass. The photon pressure is 10⁻⁵ N/m², amounting to 3.8x10⁶N for the whole surface, if it is placed like a solar sail. Typical forces from gravity and centrifugal force are almost 100 times smaller. To therefore control the motion of the objects, the photon pressure must be reduced accordingly.

The invention provides a solution to this problem by providing a stacked arrangement of the foils 100 in the shape of stairs, connected by strings. An exemplary scheme of the geometry and relative posture and positions of foils 100 can be seen in Fig. 4. With this geometry of the assembled foils, the solar-sail effect can be minimized sufficiently and effectively the solar-sail effect is almost fully canceled.

As can be seen in Fig. 4, light beams 401, 411 and 421 are incident on foils 100a, 100b, and 100c, respectively. Following light beam 401, the light reaches the front surface of foil 100a. From the front surface of foil 100a, the light beam 401 is reflected as light beam 401' onto the back surface of neighboring foil 100b. Notably, the foils 100a and 100b are not arranged to each other in an exactly parallel manner, but are relatively inclined to each other by a small angle. In this manner, the light beam 401' that reaches the back surface of the neighboring foil 100b is reflected by the foil 100b as light beam 401". Due to the small angle between each of the neighboring foils 100, the light beam 401" is not parallel to the initial light beams 401, 411, and 421, but is deflected in such a way that it misses the earth, as can be seen as angle 450 between the reflected beam 401" and the direction of light beams 401, 411, 421.

At the same time, the photon pressure caused by the light beam 401' hitting the back surface of foil 100b almost cancels the photon pressure caused by incident light beam 411, such that the total force caused by the photons from the sun is minimized.

In this way, most of the light is effectively not reflected back into the direction of the sub, but rather passed on with a slight deviation due to minor angular mismatches, to miss the position of the earth. By the symmetric arrangement (e.g. rotation symmetric) of several sets of stacked foils 100, the transverse forces can be canceled if needed without losing efficiency in surface coverage.

With the foil 100 representing relatively well aligned surfaces by themselves, it is in principle possible to direct the light from each foil 100 or foil panel in a purposely chosen direction. This means, the Bragg diffracted light may be guided into a specific direction for each color, as well as the light reflected from the stack of foils.

Thus, there is a possibility to produce "focus regions" in space, where either white light from different foil panels is superimposed to increase the power density from 1.500 W/m² by more than a factor of 100, only limited by the alignment quality. With a plurality of individually controlled foil stacks, such as several hundreds of them, in place to form the large surface together, their individual alignment mechanisms enables this procedure.

Use of this light power for in-space manufacturing may be implemented as follows: by placing focusing mirror optics (e.g. superinsulation foils etc.) of a predetermined size (e.g. 10.000 m²) in such a focus volume, e.g. placed in the L1 region, a power density in the magnitude of GW/m² may be obtained. Such power densities may be used for melting and evaporating of materials to be used in space similar to a vacuum furnace, or to pyrolytically process fuel ingredients for interstellar space travel. One possibility may be shooting the material to be processed in the form of a beam of macroscopic particles, ice, or gas through the region and collect it afterwards again.

Another possibility may be the spatial overlay of wavelength ranges from Bragg diffraction to form volumes in space with increased power density of up to MW/m² at specifically selected light wavelengths. Applications of such a volume in space could be higher specialized processing, e.g. chromatographic separation of materials, isotope enrichment or spectroscopy.

An alternative implementation of the foil 100 and an assembly, which is also remotely controllable but possibly consists of less elements can also be placed in a geostationary or solar-synchronous orbit around the earth, or in an orbit following the moon. Using the deflected light from the foil 100, the light may be targeted on a predetermined and controllable area, such as several square-kilometer sized focus, on the earth's atmosphere to heat up air aiming to stop hurricanes or similar weather phenomena. For example, an approximately 1.000 km² sized foil assembly may be used to produce a 10 km² sized focus with a power density of 100 times the normal sun light. Notably the size of the foil assembly may also be bigger or smaller, depending on the use case.

By pointing this high intensity light source with e.g. 50 kW/m² for an exposure time of one hour on clouds of an unwanted weather phenomenon over open sea, the dynamics of a storm may be massively altered: an optically thick layer of water can be evaporated within seconds. A cloud contains up to 0.5 kg water per m³. With a heat capacity of 4.000 J/kg/K, the light needs 8 s to heat this amount of water by 200 degrees. With a cloud thickness of e.g. 0.5 km, the laser would fully vaporize a heavy cloud in one hour and completely change the dynamics of a hurricane due to the convection behavior and rapid transport of the hot vapor.

As such, the foil 100 as disclosed herein may not only be used for manufacturing the assembly 300 for shading the earth, but many different application areas are given.

In the following, this application describes the specific requirements and architecture of the assembly 300 for shading the earth, i.e. the assembly 300 as it may be placed near the Lagrange point L1.

The assembly 300 for shading the earth may include the following components and the following structure. The assembly may comprise a plurality of foils 300, which are relatively positioned to each other in a predetermined arrangement. The foils comprise the carrier substrate 102, which is substantially transparent for visible light. Further, the foils 100 each comprise a line pattern of vapor deposited aluminum layer 106 on the carrier substrate 102. The line pattern is an alternating pattern of (i) first beam-shaped areas and (ii) second beam-shaped areas. Basically, only the first beam shaped areas are comprised of the aluminum layer 106 on the carrier substrate 102. The aluminum layer 106 may have a thickness of one atomic layer of aluminum. The second beam-shaped areas are punctured to reduce weight of the foil 100. The assembly may further comprise a plurality of strings for connecting the plurality of foils 100 to assemble the assembly 300 in the predetermined arrangement.

The assembly 300 may be configured to interact with incident light from its path from the sun towards the earth by (a) partially reflecting the incident light, (b) partially absorbing the incident light, and (c) partially Bragg diffracting the incident light.

The mass of the assembly 300 and the size of an effectively irradiated area of the assembly 300 may be configured such that the assembly 300 is in a force equilibrium of gravitational forces and photon pressure when arranged and positioned at a predetermined position between the earth and the sun.

The assembly 300 may be comprised of multiple subsets of assemblies comprising the stepped arrangement as illustrated in fig. 4. The individual assemblies may be relatively small (several kilometers in size to enable the use of off-the-shelf strings without excessive forces). Unfolded deployment of the material may be ensured by applying angular momentum to the respective assemblies of stacks. In an embodiment, the assembly may be rotation-symmetric. The angular momentum may be applied during remote installation.

For an ordered alignment of the assembly 300, the centrifugal force may be necessary, which may be achieved by a rotational momentum of the entire arrangement, i.e. of all subsets of the assembly 300. The arrangement can be chosen relatively freely, as long as the foils rotate around a common center of gravity. The symmetry axis of the whole construction may be defined as the common center of gravity of the assembly, i.e. of the plurality of foils.

The rotation may then be used to spread out the foils 100 and stabilize the structure. In an embodiment, two opposite assemblies of foils with different shape but same dynamic inertia may also work and it is not required to have a rotation-symmetric geometry.

As discussed above, implementation of the assembly 300 may be a placement slightly beyond L1, so that there is gravitational drag towards the sun and a different orbit duration. These effects are then counteracted by aligning the material with an angle to purposely use photon momenta not only to balance the forces but also to stabilize the position actively.

With balanced forces between gravitational drag, orbital acceleration and photon pressure, control of an assembly is done using conventional thrusters or propulsion devices at the installation, which is stabilized using strings. The actual force is then applied by the photon pressure itself, which then acts on the rotated structure of the assembly 300.

The individual assemblies of foils 100 may be placed independently over a volume in free space of approximately the size of the earth's cross section or larger, as the central region of the sun is the relevant parameter and not the earth.

This concept may be scaled and comprises a feasible solution to stop global warming without irreversible risks.

## Claims

1. A foil (100) comprising:
a carrier substrate (102), wherein the carrier substrate is substantially transparent for visible light;
a line pattern of vapor deposited aluminum layer (106) on the carrier substrate, wherein the line pattern is an alternating pattern of (i) first beam-shaped areas and (ii) second beam-shaped areas, wherein only the first beam shaped areas are comprised of the aluminum layer on the carrier substrate, **characterized in that**:
the second beam-shaped areas are punctured to reduce weight of the foil, and
the aluminum layer has a thickness of one atomic layer of aluminum.

2. The foil (100) of claim 1, wherein the carrier substrate is a formvar foil or a nylon foil with approximately 8nm thickness.

3. The foil (100) of claim 1 or 2, wherein the alternating pattern of the first and second beam-shaped areas comprise a width within a range of substantially 1µm to 2µm.

4. The foil (100) of any of claims 1 to 3, wherein the foil is configured to interact with incident light by (i) partially reflecting the incident light, (ii) partially absorbing the incident light, and (iii) partially Bragg diffracting the incident light.

5. The foil (100) of claim 4, wherein the Bragg diffraction is caused by the line pattern such that a zero order maximum of a resulting diffraction pattern is deflected by an angle between 2 degrees and 8 degrees relative to the incident light depending on the wavelength of the incident light.

6. An assembly (300) for shading the earth (308), the assembly comprising:
a plurality of foils (100) according to claim 1 that are relatively positioned to each other in a predetermined arrangement;
a plurality of strings for connecting the plurality of foils to assemble the assembly in said predetermined arrangement;
wherein the assembly is configured to interact with a subset of incident light from its path from the sun towards the earth by (a) partially reflecting the incident light, (b) partially absorbing the incident light, and (c) partially Bragg diffracting the incident light,
wherein the mass of the assembly and a size of an effectively irradiated area of the assembly are configured such that the assembly is in a force equilibrium of gravitational forces and photon pressure when arranged and positioned at a predetermined position between the earth and the sun.

7. The assembly (300) of claim 6, wherein the predetermined arrangement of the plurality of foils (100) comprises a stepped and angled arrangement such that a first light beam incident to a front surface of a first foil is reflected onto a back surface of a neighboring second foil, wherein the back surface of the second neighboring foil reflects said reflected light beam in a non-parallel manner to the first light beam.

8. The assembly (300) of claim 7, wherein the stepped and angled arrangement is configured to minimize an acceleration caused by an effective photon pressure.

9. The assembly (300) of any of claims 6 to 8, wherein the carrier substrate (102) is a formvar foil or a nylon foil with approximately 8nm thickness.

10. The assembly (300) of any of claims 6 to 9, wherein the alternating pattern of the first and second beam-shaped areas comprise a width within a range of substantially 1µm to 2µm.

11. The assembly (300) of any of claims 6 to 10, wherein the Bragg diffraction is caused by the line pattern such that a zero order maximum of a resulting diffraction pattern is deflected by an angle between 2 degrees and 8 degrees relative to the incident light.

12. The assembly (300) of any of claims 6 to 11, wherein the predetermined position between the Earth and the Sun is between the Lagrange point L1 and the Sun, such that an effective gravitational force at the predetermined position towards the Sun compensates the effective photon pressure on the arrangement against the sun.

13. The assembly (300) of any of claims 6 to 12, wherein the assembly further comprises one or more propulsion devices for correcting a relative arrangement of the assembly relative to the Sun.

14. The assembly (300) of any of claims 6 to 13, wherein the assembly is adapted to be rotatable around an rotational axis such that the plurality of foils (100) are spanned by a resulting centrifugal force, wherein the rotational axis is defined by a common center of gravity of the assembly.

15. The assembly (300) of any of claims 6 to 14, wherein the effectively irradiated area is scaled to reduce the flux from the sun to the earth by 1/287.

## Patentansprüche

1. Folie (100), umfassend:
ein Trägersubstrat (102), wobei das Trägersubstrat für sichtbares Licht im Wesentlichen transparent ist;
ein Linienmuster einer aufgedampften Aluminiumschicht (106) auf dem Trägersubstrat, wobei das Linienmuster ein alternierendes Muster aus (i) ersten balkenförmigen Bereichen und (ii) zweiten balkenförmigen Bereichen ist, wobei nur die ersten balkenförmigen Bereiche aus der Aluminiumschicht auf dem Trägersubstrat bestehen, **dadurch gekennzeichnet, dass**:
die zweiten strahlförmigen Bereiche punktiert sind, um das Gewicht der Folie zu reduzieren, und
die Aluminiumschicht eine Dicke von einer Atomlage Aluminium aufweist.

2. Folie (100) nach Anspruch 1, wobei das Trägersubstrat eine Formvar-Folie oder eine Nylonfolie mit einer Dicke von etwa 8 nm ist.

3. Folie (100) nach Anspruch 1 oder 2, wobei das alternierende Muster der ersten und zweiten strahlförmigen Bereiche eine Breite im Bereich von im Wesentlichen 1 µm bis 2 µm aufweist.

4. Folie (100) nach einem der Ansprüche 1 bis 3, wobei die Folie so konfiguriert ist, dass sie mit einfallendem Licht wechselwirkt, indem sie (i) das einfallende Licht teilweise reflektiert, (ii) das einfallende Licht teilweise absorbiert und (iii) das einfallende Licht teilweise Bragg-beugt.

5. Folie (100) nach Anspruch 4, wobei die Bragg-Beugung durch das Linienmuster verursacht wird, so dass ein Maximum nullter Ordnung eines resultierenden Beugungsmusters in Abhängigkeit von der Wellenlänge des einfallenden Lichts um einen Winkel zwischen 2 Grad und 8 Grad relativ zum einfallenden Licht abgelenkt wird.

6. Baugruppe (300) zum Beschatten der Erde (308), wobei die Anordnung umfasst:
eine Vielzahl von Folien (100) gemäß Anspruch 1, die in einer vorgegebenen Anordnung relativ zueinander positioniert sind;
eine Vielzahl von Schnüren zum Verbinden der Vielzahl von Folien, um die Anordnung in der vorgegebenen Anordnung zusammenzusetzen;
wobei die Anordnung so konfiguriert ist, dass sie mit einem Teil des einfallenden Lichts aus seinem Weg von der Sonne zur Erde wechselwirkt, indem sie (a) das einfallende Licht teilweise reflektiert, (b) das einfallende Licht teilweise absorbiert und (c) das einfallende Licht teilweise Bragg-beugt,
wobei die Masse der Anordnung und die Größe eines effektiv bestrahlten Bereichs der Anordnung so konfiguriert sind, dass sich die Anordnung in einem Kräftegleichgewicht aus Gravitationskräften und Photonendruck befindet, wenn sie an einer vorbestimmten Position zwischen der Erde und der Sonne angeordnet und positioniert ist.

7. Baugruppe (300) nach Anspruch 6, wobei die vorbestimmte Anordnung der Vielzahl von Folien (100) eine gestufte und winklige Anordnung umfasst, so dass ein erster Lichtstrahl, der auf eine vordere Oberfläche einer ersten Folie fällt, auf eine hintere Oberfläche einer benachbarten zweiten Folie reflektiert wird, wobei die hintere Oberfläche der zweiten benachbarten Folie den reflektierten Lichtstrahl in einer nicht parallelen Weise zum ersten Lichtstrahl reflektiert.

8. Baugruppe (300) nach Anspruch 7, wobei die gestufte und angewinkelte Anordnung so konfiguriert ist, dass eine durch einen effektiven Photonendruck verursachte Beschleunigung minimiert wird.

9. Baugruppe (300) nach einem der Ansprüche 6 bis 8, wobei das Trägersubstrat (102) eine Formvar-Folie oder eine Nylonfolie mit einer Dicke von etwa 8 nm ist.

10. Baugruppe (300) nach einem der Ansprüche 6 bis 9, wobei das alternierende Muster der ersten und zweiten strahlförmigen Bereiche eine Breite im Bereich von im Wesentlichen 1 µm bis 2 µm aufweist.

11. Baugruppe (300) nach einem der Ansprüche 6 bis 10, wobei die Bragg-Beugung durch das Linienmuster derart verursacht wird, dass ein Maximum nullter Ordnung eines resultierenden Beugungsmusters um einen Winkel zwischen 2 Grad und 8 Grad relativ zum einfallenden Licht abgelenkt wird.

12. Baugruppe (300) nach einem der Ansprüche 6 bis 11, wobei die vorbestimmte Position zwischen der Erde und der Sonne zwischen dem Lagrange-Punkt L1 und der Sonne liegt, so dass eine effektive Gravitationskraft an der vorbestimmten Position in Richtung der Sonne den effektiven Photonendruck auf die Anordnung gegen die Sonne kompensiert.

13. Baugruppe (300) nach einem der Ansprüche 6 bis 12, wobei die Anordnung ferner eine oder mehrere Antriebseinrichtungen zum Korrigieren einer relativen Anordnung der Anordnung relativ zur Sonne umfasst.

14. Baugruppe (300) nach einem der Ansprüche 6 bis 13, wobei die Anordnung so ausgelegt ist, dass sie um eine Drehachse drehbar ist, so dass die Vielzahl von Flügeln (100) durch eine resultierende Zentrifugalkraft aufgespannt wird, wobei die Drehachse durch einen gemeinsamen Schwerpunkt der Anordnung definiert ist.

15. Baugruppe (300) nach einem der Ansprüche 6 bis 14, wobei die effektiv bestrahlte Fläche so dimensioniert ist, dass der Fluss von der Sonne zur Erde um 1/287 reduziert wird.

## Revendications

1. Feuille (100) comprenant :
un substrat de support (102), dans lequel le substrat de support est sensiblement transparent à la lumière visible ;
un motif linéaire de la couche d'aluminium (106) déposée en phase vapeur sur le substrat porteur, dans lequel le motif linéaire est un motif alterné de (i) premières zones en forme de faisceau et (ii) secondes zones en forme de faisceau, dans lequel seules les premières zones en forme de faisceau sont constituées de la couche d'aluminium sur le substrat porteur, **caractérisé par le fait que** :
les secondes zones en forme de faisceau sont perforées pour réduire le poids de la feuille, et
la couche d'aluminium a une épaisseur d'une couche atomique d'aluminium.

2. Feuille (100) selon la revendication 1, dans laquelle le substrat porteur est une feuille de formvar ou une feuille de nylon d'une épaisseur d'environ 8 nm.

3. Feuille (100) selon les revendications 1 ou 2, dans laquelle le motif alterné de la première et de la seconde zone en forme de faisceau est d'une largeur comprise entre 1 µm et 2 µm.

4. Feuille (100) selon l'une des revendications 1 à 3, dans laquelle la feuille est configurée pour interagir avec la lumière incidente en (i) réfléchissant partiellement la lumière incidente, (ii) absorbant partiellement la lumière incidente, et (iii) diffractant partiellement la lumière incidente selon le procédé de Bragg.

5. Feuille (100) selon la revendication 4, dans laquelle la diffraction de Bragg est causée par le motif de ligne de telle sorte qu'un maximum d'ordre zéro d'un motif de diffraction résultant est dévié d'un angle compris entre 2 degrés et 8 degrés par rapport à la lumière incidente, en fonction de la longueur d'onde de la lumière incidente.

6. Ensemble (300) pour ombrager la terre (308), ensemble comprenant :
une pluralité de feuilles (100) selon la revendication 1 qui sont relativement positionnées les unes par rapport aux autres selon un schéma prédéterminé ;
une pluralité de cordes pour relier la pluralité de feuilles afin d'assembler l'ensemble selon ledit schéma prédéterminé ;
dans lequel l'ensemble est configuré pour interagir avec un sous-ensemble de lumière incidente sur son trajet du soleil vers la terre en (a) réfléchissant partiellement la lumière incidente, (b) absorbant partiellement la lumière incidente, et (c) diffractant partiellement la lumière incidente selon le procédé de Bragg,
dans lequel la masse de l'ensemble et la taille d'une zone effectivement irradiée de l'ensemble sont configurées de manière à ce que l'ensemble soit en équilibre entre les forces gravitationnelles et la pression des photons lorsqu'il est disposé et positionné de façon prédéterminée entre la terre et le soleil.

7. Ensemble (300) selon la revendication 6, dans lequel le schéma prédéterminé de la pluralité de feuilles (100) comprend une disposition en escalier et en angle de sorte qu'un premier faisceau lumineux incident sur une surface avant d'une première feuille est réfléchi sur une surface arrière d'une seconde feuille voisine, dans laquelle la surface arrière de la seconde feuille voisine réfléchit ledit faisceau lumineux réfléchi d'une manière non parallèle au premier faisceau lumineux.

8. Ensemble (300) selon la revendication 7, dans lequel la disposition en escalier et en angle est configurée pour minimiser l'accélération causée par une pression photonique effective.

9. Ensemble (300) selon l'une des revendications 6 à 8, dans lequel le substrat porteur (102) est une feuille de formvar ou une feuille de nylon d'une épaisseur d'environ 8 nm.

10. Ensemble (300) selon l'une des revendications 6 à 9, dans lequel le motif alterné de la première et de la seconde zone en forme de faisceau a une largeur comprise entre 1 µm et 2 µm.

11. Ensemble (300) selon l'une des revendications 6 à 10, dans lequel la diffraction de Bragg est provoquée par le motif de lignes de telle sorte qu'un maximum d'ordre zéro d'un motif de diffraction résultant est dévié d'un angle compris entre 2 degrés et 8 degrés par rapport à la lumière incidente.

12. Ensemble (300) selon l'une des revendications 6 à 11, dans lequel la position prédéterminée entre la terre et le soleil est située entre le point de Lagrange L1 et le soleil, de sorte qu'une force gravitationnelle effective à la position prédéterminée vers le soleil compense la pression photonique effective sur la disposition de l'ensemble par rapport au soleil.

13. Ensemble (300) selon l'une des revendications 6 à 12, dans lequel l'ensemble comprend en outre un ou plusieurs dispositifs de propulsion pour corriger une disposition relative de l'ensemble par rapport au soleil.

14. Ensemble (300) selon l'une des revendications 6 à 13, dans lequel l'ensemble est conçu pour tourner autour d'un axe de rotation de sorte que la pluralité de feuilles (100) est balayée par une force centrifuge résultante, l'axe de rotation étant défini par un centre de gravité commun de l'ensemble.

15. Ensemble (300) selon l'une des revendications 6 à 14, dans lequel la zone effectivement irradiée est dimensionnée pour réduire le flux du soleil vers la terre d'un facteur de 1/287.
